# DEMANDE DE BREVET EUROPEEN

(11) **EP 1 167 797 A1**
(43) Date de publication de la demande: **02.01.2002**
(21) Numéro de dépôt: 01401618.2
(22) Date de dépôt: 19.06.2001
(51) Int. Cl.: F16D 3/41

(54) **Croisillon pour joint de cardan et joint de cardan correspondant**

(30) Priorité: 28.06.2000 FR 0008343
(71) Demandeur: NADELLA, F-18102 Vierzon Cédex (FR)
(72) Inventeur: Barbosa, Philippe-Manuel, 18100 Vierzon (FR); Courbot, Christian, 18800 Foecy (FR)
(74) Mandataire: Jacobson, Claude

(57) **Abrégé**

Ce croisillon pour joint de cardan comporte deux paires de bras (24A, 24B) s'étendant perpendiculairement l'une par rapport à l'autre, les bras (24A, 24B) de chaque paire s'étendant coaxialement. Chaque bras comporte une surface de roulement (30) à section transversale sensiblement circulaire. La surface de roulement d'au moins un bras comprend une partie extérieure (40) dont le diamètre de la section transversale (38) diminue vers l'extrémité extérieure du bras. La génératrice de la partie extérieure a la forme d'un arc courbe convexe.

Application aux colonnes de direction des véhicules automobiles.

## Description

La présente invention concerne un croisillon pour joint de cardan, du type comportant deux paires de bras s'étendant perpendiculairement l'une par rapport à l'autre, les bras de chaque paire s'étendant coaxialement, et chaque bras comportant une surface de roulement d'une couronne d'aiguilles, cette surface ayant une section transversale sensiblement circulaire.

L'invention s'applique notamment aux joints de cardan pour colonne de direction de véhicule automobile.

On connaît dans l'état de la technique des joints de cardan comprenant deux fourches, qui sont chacune reliées à un arbre. Les joints de cardan connus comprennent en outre un croisillon comportant quatre bras disposés deux à deux perpendiculairement les uns aux autres. Chaque bras comporte une surface de roulement cylindrique sur laquelle est disposée une couronne d'aiguilles. Cette couronne est entourée d'une douille qui est emmanchée dans un alésage ménagé dans chacune des jambes des fourches.

La jambe présente une épaisseur réduite, inférieure à la hauteur de la douille pour les raisons suivantes :
- permettre une déformation de la jambe, déformation qui est nécessaire pour l'assemblage du joint ;
- obtenir un angle de fonctionnement important du joint ;
- permettre la fabrication des jambes à partir d'un tube.

De ce fait, la douille n'est emmanchée dans l'alésage que sur une partie de sa hauteur. En conséquence, la douille, une fois emmanchée, ne présente plus une forme parfaitement cylindrique, mais une forme sensiblement conique, et les portées cylindriques du croisillon ne sont pas sollicitées uniformément.

La durée de vie du joint de cardan est donc limitée de façon correspondante.

L'invention a pour but de pallier cet inconvénient et de proposer un joint de cardan qui ait une durée de vie élevée.

A cet effet, l'invention a pour objet un croisillon du type précité, caractérisé en ce que la surface de roulement d'au moins un bras comprend une partie extérieure dont le diamètre de la section transversale diminue vers l'extrémité extérieure du bras, et en ce que la génératrice de ladite partie extérieure a la forme d'un arc courbe convexe.

Suivant des modes particuliers de réalisation du croisillon selon l'invention, celui-ci peut comporter une ou plusieurs des caractéristiques indiquées dans les revendications 2 à 9.

L'invention a en outre pour objet un joint de cardan comprenant un croisillon comme défini ci-dessus.

L'invention sera mieux comprise à la lecture de la description qui va suivre, donnée uniquement à titre d'exemple et faite en se référant aux dessins annexés, sur lesquels :
- la Figure 1 est une vue schématique en coupe partielle d'un joint de cardan comprenant un croisillon selon l'invention ;
- la Figure 2 est une vue schématique du croisillon de ce joint;
- la Figure 3 est une vue du détail III de la Figure 2 à plus grande échelle.

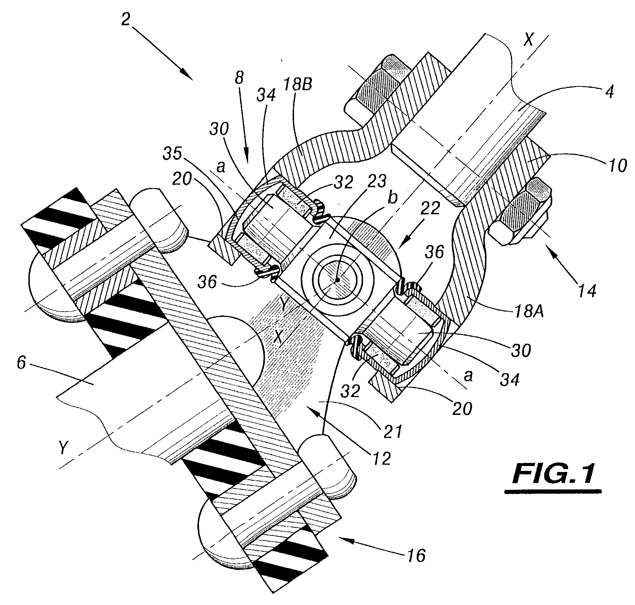

Sur la Figure 1, on a représenté un ensemble de joint de cardan selon l'invention, désigné par la référence générale 2.

L'ensemble comprend un premier arbre 4 d'axe X-X et un deuxième arbre 6 d'axe Y-Y. Les deux arbres 4, 6 sont reliés l'un à l'autre par un joint de cardan 8.

Le joint de cardan 8 comprend deux fourches, à savoir une première fourche 10 et une deuxième fourche 12 fixés au premier arbre 4 et au deuxième arbre 6 respectivement.

La fixation des fourches 10, 12 aux arbres 4, 6 est faite par une chape 4 et une bride 16, comme cela est bien connu dans la technique.

La première fourche 10 comporte deux premières jambes 18A, 18B disposées en vis-à-vis symétriquement et parallèlement par rapport à l'axe X-X du premier arbre 4. Chaque jambe 18A, 18B comporte un alésage 20. Les deux alésages sont coaxiaux selon un axe a-a qui s'étend perpendiculairement à l'axe X-X.

La deuxième fourche 12 comporte deux deuxièmes jambes, dont une jambe 21 est visible, dans lesquelles sont ménagés deux alésages (non visibles) identiques aux alésages 20 de la première fourche 10 et coaxiaux selon un axe b-b perpendiculaire à l'axe a-a et, dans la position représenté, perpendiculaire au plan de la Figure 1.

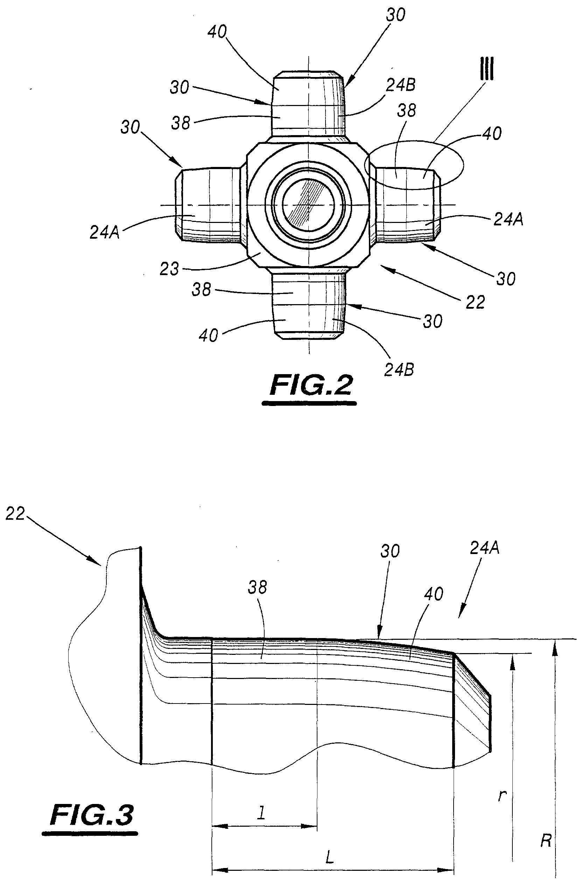

Les deux fourches 10, 12 sont reliées en rotation autour de l'axe a-a et autour de l'axe b-b par un croisillon 22 (Figure 2).

Le croisillon 22 comporte un moyeu ou dé central 23 d'où partent quatre bras 24A, 24B identiques agencés en deux paires. Les bras 24A, 24B de chaque paire sont disposés coaxialement l'un à l'autre. Les deux paires de bras sont disposées perpendiculairement l'une à l'autre.

Chaque bras 24A, 24B comporte une surface de roulement 30 sur laquelle est disposée une couronne d'aiguilles 32 (Figure 1). A l'état monté, la surface de roulement 30 et la couronne d'aiguilles 32 sont reçues dans une douille 34.

La douille 34 est, avant l'assemblage, cylindrique et présente un diamètre extérieur légèrement plus grand que le diamètre intérieur des alésages 20 des fourches 10, 12. La douille 34 est fermée sur son côté extérieur par un fond 35. La hauteur de la douille 34 est plus grande que l'épaisseur des jambes 18A, 18B, 21 des fourches.

Comme il est représenté sur la Figure 1, l'extrémité fermée de la douille 34 est emmanchée dans l'alésage 20 de la jambe correspondante. En conséquence, le diamètre de la douille 34 est rétréci dans cette zone, de sorte que la surface intérieure de la douille 34 présente une forme à peu près tronconique à l'état monté.

En outre, un joint d'étanchéité 36 est disposé entre le côté intérieur ouvert de la douille 34 et le croisillon 22.

Sur la Figure 3, on a représenté les détails géométriques d'un bras 24A du croisillon 22. Chaque surface de roulement 30 du croisillon présente une longueur totale L. Chaque surface de roulement 30 comporte une partie intérieure cylindrique 38 à section circulaire, de longueur 1 et de rayon R, ainsi qu'une partie extérieure 40 à section transversale circulaire dont le diamètre décroît vers l'extérieur. L'extrémité extérieure de cette partie extérieure 40 présente un rayon r < R.

De préférence, la partie cylindrique 38 présente une longueur 1 inférieure à la moitié de la longueur totale L de la surface de roulement 30, de façon telle que la partie extérieure 40 s'étend vers l'intérieur au-delà du milieu de la surface de roulement 30.

A l'état monté, la partie extérieure 40 de la surface de roulement compense le rétrécissement de la douille 34 décrit plus haut.

En conséquence, les aiguilles s'appliquent à peu près uniformément contre la surface de roulement 30 et la douille 34, et le point de pression maximale entre les aiguilles 32 et la surface de roulement 30 se trouve vers le milieu de cette dernière. Ainsi le couple maximal pouvant être transmis et/ou la durée de vie du croisillon, et par suite du joint de cardan, sont augmentés.

Dans l'exemple représenté, la ligne génératrice de la partie extérieure 40 est un arc de cercle. Cet arc de cercle se raccorde tangentiellement à la partie cylindrique 38 afin de diminuer des pressions de contact entre les aiguilles 32 et la surface de roulement 30 dans la zone de transition.

La différence entre le rayon R de la partie cylindrique et le rayon r de l'extrémité du bras est de préférence compris entre 6 *µ*m et 10 *µ*m pour un rayon R de la partie cylindrique 38 compris entre 5 mm et 12 mm et une longueur de la surface de roulement comprise entre 5 mm et 15 mm. Ainsi, la courbure de la partie 40 est fortement exagérée sur les dessins.

En variante, la ligne génératrice de la partie extérieure de la surface de roulement avoir une forme logarithmique.

## Revendications

1. Croisillon pour joint de cardan, du type comportant deux paires de bras (24A, 24B) s'étendant perpendiculairement l'une par rapport à l'autre, les bras (24A, 24B) de chaque paire s'étendant coaxialement, et chaque bras comportant une surface (30) de roulement d'une couronne d'aiguilles (32), cette surface (30) ayant une section transversale sensiblement circulaire, **caractérisé en ce que** la surface de roulement d'au moins un bras comprend une partie extérieure (40) dont le diamètre de la section transversale diminue vers l'extrémité extérieure du bras, et **en ce que** la génératrice de ladite partie extérieure (40) a la forme d'un arc courbe convexe.

2. Croisillon selon la revendication 1, **caractérisé en ce que** chacune des surfaces de roulement (30) comprend une partie extérieure (40) dont le diamètre de la section transversale diminue vers l'extrémité extérieure du bras et dont la génératrice a la forme d'un arc courbe convexe.

3. Croisillon selon la revendication 1 ou 2, **caractérisé en ce que** ledit arc est un arc de cercle.

4. Croisillon selon la revendication 1 ou 2, **caractérisé en ce que** ledit arc est une courbe logarithmique.

5. Croisillon selon l'une quelconque des revendications précédentes, **caractérisé en ce que** ladite partie extérieure (40) se raccorde tangentiellement au reste de la surface de roulement (38) correspondante.

6. Croisillon selon l'une quelconque des revendications précédentes, **caractérisé en ce que** le diamètre maximal de la surface de roulement (30) est situé sur la moitié intérieure de la surface de roulement.

7. Croisillon selon l'une quelconque des revendications précédentes, **caractérisé en ce que** la différence entre le rayon (R) du reste de la surface de roulement (38) et le rayon de l'extrémité du bras (r) est située entre 0,5.10⁻³ et 2.10⁻³ du rayon (R) du reste de la surface de roulement (38).

8. Croisillon selon l'une quelconque des revendications précédentes, **caractérisé en ce que** la différence entre le rayon (R) du reste de la surface de roulement (38) et le rayon de l'extrémité du bras (r) est située entre 0,4.10⁻³ et 2.10⁻³ de la longueur (L) de la surface de roulement.

9. Croisillon selon les revendications 7 et 8 prises ensemble, **caractérisé en ce que** la différence entre le rayon (R) du reste de la surface de roulement (38) et le rayon de l'extrémité du bras (r) est comprise entre 6 *µ*m et 10 *µ*m pour un rayon (R) du reste de la surface de roulement compris entre 5 mm et 12 mm et une longueur de la surface de roulement comprise entre 5 mm et 15 mm.

10. Joint de cardan comprenant un croisillon selon l'une quelconque des revendications 1 à 9.
